# EUROPEAN PATENT SPECIFICATION

(11) **EP 4 033 823 B1**
(45) Date of publication and mention of the grant of the patent: **05.11.2025**
(21) Application number: 20866812.9
(22) Date of filing: 16.09.2020
(51) Int. Cl.: H04W 56/00, H04W 52/02

(54) **DRX COMMUNICATION SYNCHRONIZATION AND START CONTROL METHOD AND APPARATUS, DEVICE, AND STORAGE MEDIUM**
DRX-KOMMUNIKATIONSSYNCHRONISATIONS- UND STARTSTEUERVERFAHREN SOWIE GERÄT, VORRICHTUNG UND SPEICHERMEDIUM
PROCÉDÉ DE SYNCHRONISATION ET DE COMMANDE DE DÉMARRAGE DE COMMUNICATION DE DRX AINSI QU'APPAREIL, DISPOSITIF ET SUPPORT D'INFORMATIONS

(30) Priority: 19.09.2019 CN 201910888447
(43) Date of publication of application: 27.07.2022
(73) Proprietor: ZTE Corporation, Shenzhen, Guangdong 518057 (CN)
(72) Inventor: GUO, Ning, Shenzhen, Guangdong 518057 (CN)
(74) Representative: Deambrogi, Edgardo
(86) International application number: PCT/CN2020/115639
(87) International publication number: WO 2021/052371

(56) References cited:
- WO-A1-2016/158394
- CN-A- 101 543 120
- CN-A- 101 562 889
- CN-A- 103 974 390
- US-A1- 2011 002 281
- US-A1- 2016 044 578
- US-A1- 2017 325 163
- BROADCOM CORPORATION: "Parameters for Coordinated DRX for Dual Connectivity", 3GPP DRAFT; R2-140433 PARAMETERS FOR COORDINATED DRX FOR DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic, 9 February 2014 (2014-02-09), Mobile Competence Centre ; 650, route des Lucioles ; F-06921 Sophia-Antipolis Cedex ; France, XP050737626

## Description

### Technical Field

The present disclosure relates to the field of communications, and in particular, to a DRX (Discontinuous Reception) communication synchronization and start control method and apparatus, a device and a readable storage medium.

### Background

In a wireless network communication system, data streams are bursty. For example, there may be data transmission within a period of time, but there may not be any data transmission within a next longer period of time. When there is no data transmission, a terminal can stop receiving a PDCCH (Physical Downlink Control Channel), so as to reduce the power consumption and prolong the battery life, which is a basic principle of DRX communication.

In the wireless network communication system of a related art, after the terminal and a base station acquire their respective DRX parameters, the terminal and the base station randomly start a DRX communication function (that is, take effect of the DRX parameters and enter a DRX mode), which leads to poor start controllability of the DRX communication function of the terminal and the DRX communication function of the base station, and cannot be well applicable to various application scenarios that require higher reliability of the DRX communication function.

US20160044578A1 discloses idle-mode enhancements for extended idle discontinuous reception (EI-DRX); US20170325163A1 discloses mobile telephone, apparatus, method and computer implementable instructions product; US20110002281A1 discloses discontinuous reception for carrier aggregation; and CN103974390A discloses activation method for DRX mode, user equipment, base station and system. However, the above problem still remains unsolved.

### Summary

Embodiments of the present disclosure provide a DRX communication synchronization and start control method and apparatus, a system, and a readable storage medium, which can solve the problem in a related art that, a DRX communication function of a terminal and a DRX communication function of a base station are both started in a random manner, resulting in poor controllability.

The present disclosure is set out in the appended set of claims.

The embodiments of the present disclosure provide a DRX communication synchronization and control method according to claim 1.

The embodiments of the present disclosure further provide a DRX communication start control method according to independent claim 4.

The embodiments of the present disclosure further provide a network management device according to independent claim 5.

The embodiments of the present disclosure further provide a system according to independent claim 6.

The embodiments of the present disclosure further provide a computer-readable storage medium, wherein the computer-readable storage medium stores a first computer program, and when executed by a first processor, the first computer program implements the operations of the DRX communication synchronization control method as described above;
or,
the computer-readable storage medium stores a second computer program, and when executed by a second processor, the second computer program implements the operations of the DRX communication start control method as described above.

### Beneficial effects

According to the DRX communication synchronization and start control method and apparatus, the device and the readable storage medium provided by the embodiments of the present disclosure, when the first DRX parameter of the base station and the second DRX parameter of the terminal are generated, the first start offset duration and the second start offset duration can be respectively added into the first DRX parameter and the second DRX parameter; and after respectively acquiring the first DRX parameter and the second DRX parameter, the base station and the terminal can synchronously start the DRX communication function (that is, take effect the DRX parameters and enter the DRX mode) according to the first start offset duration in the first DRX parameter and the second start offset duration in the second DRX parameter, respectively. Compared with a manner in the related art that the base station and the terminal randomly start the DRX communication function, a better controllability on the DRX communication function can be supported, and the solution is more applicable to various communication application scenarios.

For example, further, in some communication application scenarios, in a case where the DRX communications of the base station and the terminal are required to be aligned, the first start offset duration and the second start offset duration may be set to be equal or substantially equal, so as to ensure that the base station and the terminal synchronously or basically synchronously start the DRX communication function, such that the DRX communications of the base station and the terminal are aligned or basically aligned. In comparison, the manner of randomly starting the DRX communication function by the base station and the terminal in the related art cannot guarantee the alignment of the DRX communications of the base station and the terminal, and the controllability is thus poor. The manner of randomly starting the DRX communication function by the base station and the terminal in the related art may lead to complete misalignment or only partial alignment. In the case of complete misalignment, the terminal and the base station cannot interact with each other, and the terminal cannot access the base station. In the case of partial alignment, the terminal can only interact with the base station at the time of alignment, which will prolong the access delay of the terminal and limit the traffic of the terminal at the same time. According to the method provided by the embodiments of the present disclosure, as long as the first start offset duration and the second start offset duration are reasonably set, it can be ensured that the DRX communications of the base station and the terminal are aligned, so that the terminal can interact with the base station normally, thereby improving the access stability of the terminal, shortening the access delay of the terminal, and avoiding the impact of state asynchrony on the traffic of the terminal, etc.

Other features of the present disclosure and corresponding beneficial effects are set forth in later parts of the specification, and it should be understood that at least some of the beneficial effects will become apparent from the description of the present specification.

### Brief Description of the Drawings

Fig. 1 a schematic diagram of complete misalignment of DRX communications;
Fig. 2 is a schematic diagram of partial alignment of the DRX communications;
Fig. 3 is a schematic flow diagram of a DRX communication synchronization control method according to Embodiment 1 of the present disclosure;
Fig. 4 is a schematic diagram of a sending procedure of a second DRX parameter according to Embodiment 1 of the present disclosure;
Fig. 5 is a schematic structural diagram of complete alignment of DRX communications according to Embodiment 1 of the present disclosure;
Fig. 6 is a schematic flow diagram of a DRX communication start control method from the perspective of a base station according to Embodiment 1 of the present disclosure;
Fig. 7 is a schematic flow diagram of a DRX communication start control method from the perspective of a terminal according to Embodiment 1 of the present disclosure;
Fig. 8 is a schematic structural diagram of a DRX communication synchronization control apparatus according to Embodiment 2 of the present disclosure;
Fig. 9 is a schematic structural diagram of a DRX communication start control apparatus according to Embodiment 2 of the present disclosure;
Fig. 10 is a schematic structural diagram of a DRX communication start control apparatus according to Embodiment 2 of the present disclosure;
Fig. 11 is a schematic structural diagram of a network management device according to Embodiment 3 of the present disclosure;
Fig. 12 is a schematic structural diagram of a base station device according to Embodiment 3 of the present disclosure; and
Fig. 13 is a schematic structural diagram of a terminal device according to Embodiment 3 of the present disclosure.

### Detailed Description

In order to make the objectives, technical solutions and advantages of the present disclosure clearer, the embodiments of the present disclosure will be further described in detail below by means of specific embodiments in conjunction with the drawings. It should be understood that, the specific embodiments described herein are only used for explaining the present disclosure, but are not intended to limit the present disclosure.

### Embodiment 1

In a related art of a wireless network communication system, it is not specified when a terminal and a base station activate DRX parameters after receiving the DRX parameters. In the related art, both the terminal and the base station randomly activate a DRX communication function. For example, different terminal manufacturers and base station manufacturers start the DRX communication function according to times randomly set by these manufacturers, and the random times may be the same or different, resulting in poor start controllability of the terminal and base station for the DRX communication function, which leads to various problems. For example, taking a 5G (5th-Generation mobile communication technology) network as an example, the manner adopted in the related art may lead to, but not limited to, the following problems.

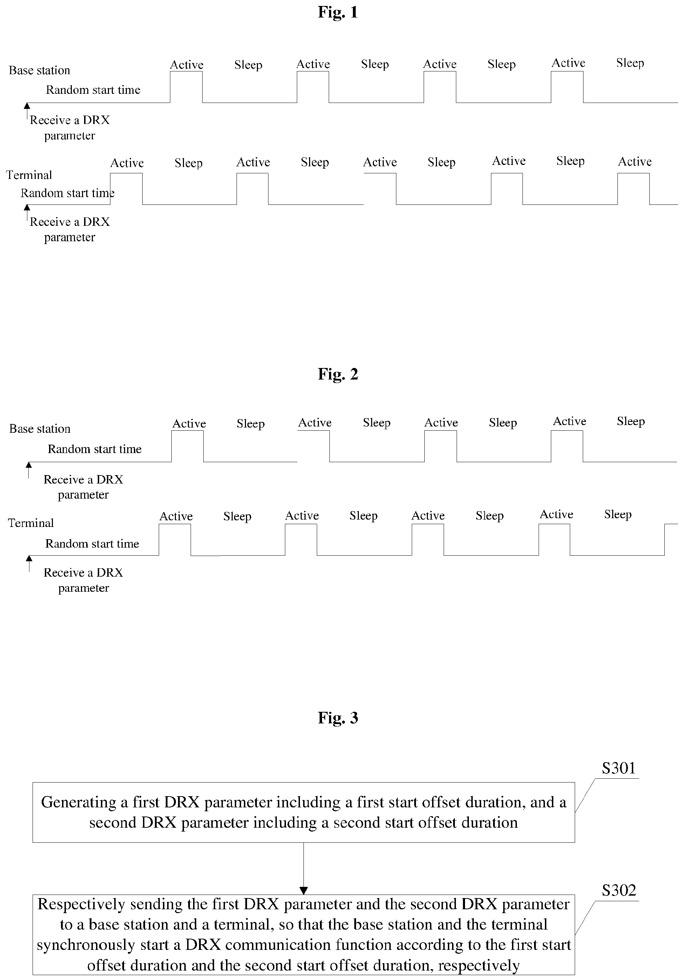

Under an NSA (Non-Standalone) architecture, when the terminal accesses a 4G (4th-Generation mobile communication technology) network, the terminal will acquire the DRX parameter. If the terminal and the base station do not activate the DRX parameters at the same time, it is very likely that the activation states of the DRX communications of the terminal and the base station are not synchronized. In extreme cases, during a DRX communication process, it may be even possible that one of the terminal and the base station is in an active state while the other is in a sleep state. In this case, the terminal will not be able to normally receive or send signaling of accessing the 5G network, and eventually the terminal can only stay on the 4G network and cannot access the 5G network. For example, as shown in Fig. 1, after the terminal and the base station start the DRX communication function, the terminal is in the active state while the base station is in the sleep state, or the base station is in the active state while the terminal is in the sleep state, in other words, the states of the terminal and the base station are exactly opposite, and the active states can never overlap. In this case, the base station and the terminal cannot perform signaling interaction at all, and the terminal can never access the base station.

Under an SA (Standalone) architecture, there is also a similar problem. After accessing the base station, the terminal will receive the DRX parameter, and the moments when the base station and the terminal take effect of the DRX parameters are different, the above problems will also occur, such that the terminal is never able to complete a network access operation.

In addition, if the DRX communications of the base station and the terminal are not completely synchronous, even if the terminal can access the wireless network, the access signaling can only be sent and received when the terminal and the base station are in the active state at the same time, resulting in a longer access delay. After the access is successful, there will be a period of asynchronization, which affects high-traffic related services. For example, as shown in Fig. 2, after the terminal and the base station start the DRX communication function, part of active states of the base station and the terminal overlap, and the terminal and the base station can only interact with each other within a very short period of time in the overlapping area. Although the access of the terminal is not affected, most non-overlapping areas cannot be used, which seriously affects the traffic of the terminal and leads to a low resource utilization rate.

In view of the above problems, in the present embodiment, when a first DRX parameter of a base station and a second DRX parameter of a terminal are generated, a first start offset duration and a second start offset duration can be respectively added into the first DRX parameter and the second DRX parameter; and after respectively acquiring the first DRX parameter and the second DRX parameter, the base station and the terminal can synchronously start the DRX communication function according to the first start offset duration in the first DRX parameter and the second start offset duration in the second DRX parameter respectively. Compared with a manner in the related art that the base station and the terminal randomly start the DRX communication function, a better controllability on the DRX communication function can be supported, and the solution is more applicable to various communication application scenarios. For example, for an application scenario that requires the alignment of the DRX communications of the base station and the terminal, the first start offset duration and the second start offset duration may be set to be equal or substantially equal, so that the alignment of the DRX communications of the base station and the terminal is realized.

For the convenience of understanding, the present embodiment will be described below in conjunction with the generation and sending of DRX parameters on a device that is used for generating and configuring the DRX parameters, and by taking a method for implementing DRX communication synchronization control as an example. As shown in Fig. 3, the method includes operations S301 and S302.

At S301, a first DRX parameter including a first start offset duration (first drx-startOffset), and a second DRX parameter including a second start offset duration (second drx-startOffset) are generated.

At S302, the first DRX parameter and the second DRX parameter are respectively sent to a base station and a terminal, so that the base station and the terminal synchronously start a DRX communication function according to the first start offset duration and the second start offset duration, respectively.

It should be understood that, the operations shown in Fig. 3 can be executed by, but is not limited to be executed by, a network management device. In addition, in the present embodiment, the DRX parameters may be generated in any manner of generating the DRX parameters by a network management device, and the specific manner will not be described in detail here.

In addition, it should be understood that, in present embodiment, the first DRX parameter of the base station includes the first DRX parameter, and the second DRX parameter of the terminal includes the second DRX parameter, and parameters that each of the first DRX parameter and the second DRX parameter needs to include can also be flexibly determined according to specific application scenarios. For example, in some application scenarios, the first DRX parameter and the second DRX parameter may further include, but are not limited to, at least one of the following parameters:

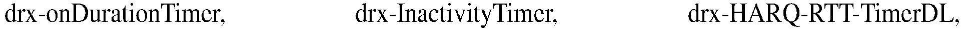

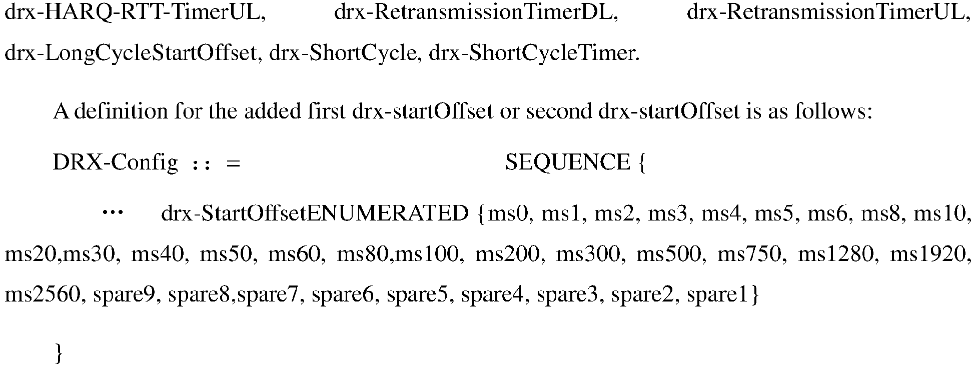

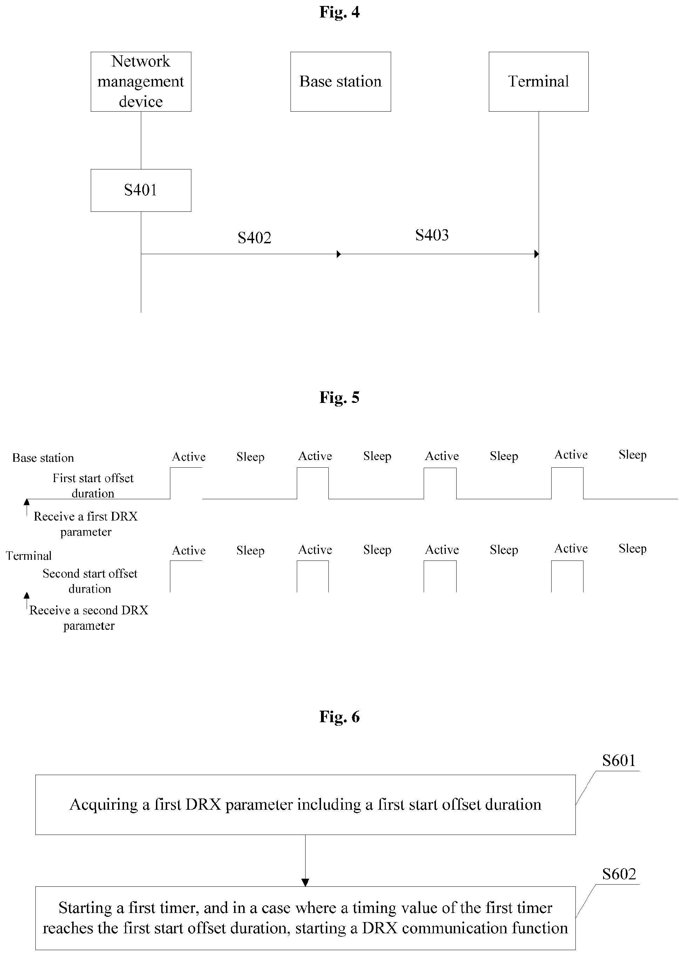

In present embodiment, the manner of sending the first DRX parameter and the second DRX parameter can be, but is not limited to be, the following manner. The first DRX parameter is directly sent to the base station, and the second DRX parameter is sent to the terminal through the base station. Moreover, in some examples, in order to improve the accuracy of control, the first DRX parameter and the second DRX parameter may be sent to the base station synchronously, and the base station forwards the second DRX parameter to the terminal. A sending process, as shown in Fig. 4, includes the following operations S401 to S403.

At S401, a network management device generates the first DRX parameter and the second DRX parameter.

At S402, the network management device synchronously sends the first DRX parameter and the second DRX parameter to the base station.

The manner of synchronous sending can be implemented in a way that the first DRX parameter and the second DRX parameter are synchronously sent to the base station by means of different data packets.

At S403, the base station sends the received second DRX parameter to the terminal.

It should be understood that, in the present embodiment, specific values of the first start offset duration and the second start offset duration can be flexibly set according to specific application scenarios.

For example, for application scenarios that require complete or substantially complete alignment of the DRX communications, the first start offset duration and the second start offset duration may be set to be equal; or, the first start offset duration and the second start offset duration are set to be substantially equal. For example, a substantially equal setting manner may be as follows.

In a case where the second DRX parameter is forwarded to the terminal through the base station, the first start offset duration is set to be equal to a sum of the second start offset duration and a forwarding duration, and the forwarding duration is a duration that is required by the base station to forward the second DRX parameter to the terminal. For example, in one example, the forwarding duration may be a first duration that is required by the base station to send the second DRX parameter to the terminal by means of an air interface. In some other examples, the forwarding duration may be the sum of a first duration that is required by the base station to send the second DRX parameter to the terminal by means of the air interface, and a second duration that is required by the base station from receiving the second DRX parameter to sending the DRX parameter from the air interface. In such a case, after the base station starts the DRX communication function on the basis of the first start offset duration, and the terminal starts the DRX communication function on the basis of the second start offset duration, the DRX communication on the base station is completely or almost completely aligned with the DRX communication on the terminal. As shown in Fig. 5, after respectively receiving the first DRX parameter and the second DRX parameter, the base station and the terminal respectively start the DRX function after delaying the first start offset duration and the second start offset duration. In this way, it is ensured that the active states are completely overlapped or almost completely overlapped to avoid the occurrence of the above problems, and the terminal can normally interact with the base station, thereby improving access stability of the terminal, shortening the access delay of the terminal, and avoiding the impact of state asynchronization on the traffic of the terminal, etc.

Of course, for application scenarios that require incomplete alignment of the DRX communications, precise control may also be performed by setting the specific values of the first start offset duration and the second start offset duration. For example, for application scenarios that require only 50% alignment, or 80% alignment, or complete non-alignment, and so on, corresponding purposes can be realized by reasonably setting the first start offset duration and the second start offset duration according to specific needs.

In present embodiment, from the perspective of a base station device, the DRX communication start control method, as shown in Fig. 6, includes the following operations S601 and S602.

At S601, a first DRX parameter including a first start offset duration is acquired.

In present embodiment, the base station may acquire the first DRX parameter from the network management device by means of, but not limited to, the foregoing exemplary manner.

At S602, a first timer is started, and in a case where a timing value of the first timer reaches the first start offset duration, a DRX communication function is started.

For example, after acquiring the first DRX parameter, a BBU (Building Base band Unit) of the base station can start a first timer the duration of which is set to be equal to the first start offset duration, and starts the DRX function after the first timer expires.

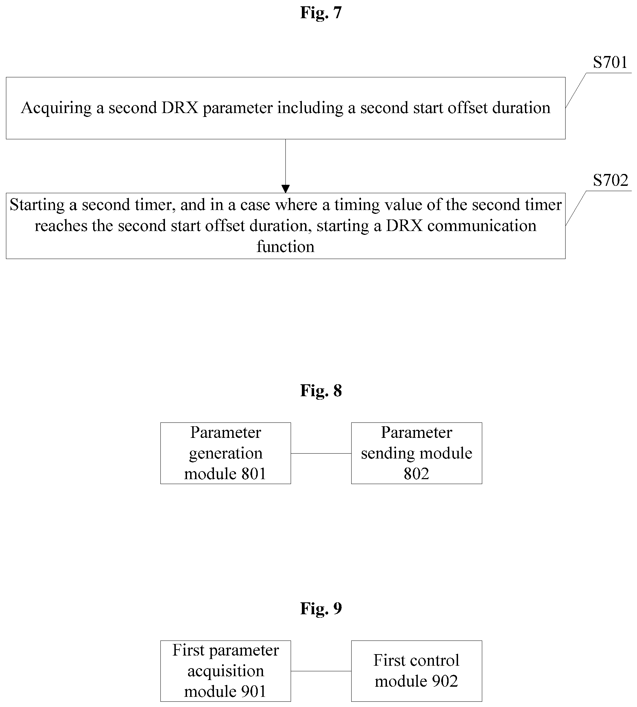

In present embodiment, from the perspective of a terminal device, the DRX communication start control method, as shown in Fig. 7, includes the following operations S701 and S702.

At S701, a second DRX parameter including a second start offset duration is acquired.

In present embodiment, the terminal may acquire the second DRX parameter from the network management device by means of, but not limited to, the foregoing exemplary manner.

At S702, a second timer is started, and in a case where a timing value of the second timer reaches the second start offset duration, a DRX communication function is started.

For example, after receiving the second DRX parameter, a terminal baseband chip starts a second timer the duration of which is set to be equal to the second start offset duration, and start the DRX function after the second timer expires. In this way, precise control of the alignment state of the terminal and the base station is finally realized, and the requirements of various communication application scenarios can be satisfied flexibly and reliably.

### Embodiment 2

The present embodiment provides a DRX communication synchronization control apparatus. The DRX communication synchronization control apparatus can be disposed in various devices for generating and configuring DRX parameters, such as, but not limited to, various network management devices. As shown in Fig. 8, the DRX communication synchronization control apparatus includes a parameter generation module 801 and a parameter sending module 802.

The parameter generation module 801 is configured to generate a first DRX parameter including a first start offset duration, and a second DRX parameter including a second start offset duration. With regard to the specific generation manner, and specific values of the first start offset duration and the second start offset duration, reference can be made to those descriptions in the foregoing embodiments, and details are not described herein again.

The parameter sending module 802 is configured to respectively send the first DRX parameter and the second DRX parameter generated by the parameter generating module 801 to a base station and a terminal, so that the base station and the terminal start a DRX communication function according to the first delay time and the second delay duration, respectively. With regard to a specific sending manner, reference can be made to those descriptions in the foregoing embodiments, and details are not described herein again.

The present embodiment provides a DRX communication start control apparatus. The DRX communication start control apparatus can be disposed in various communication devices using DRX communications, such as, but not limited to, various forms of base station devices. As shown in Fig. 9, the DRX communication start control apparatus includes a first parameter acquisition module 901 and a first control module 902.

The first parameter acquisition module 901 is configured to acquire a first DRX parameter including a first start offset duration. The first parameter acquisition module 901 may acquire the first DRX parameter from the network management device by means of, but not limited to, the foregoing exemplary manner.

The first control module 902 is configured to start a first timer, and in a case where a timing value of the first timer reaches the first start offset duration, start a DRX communication function. With regard to a specific control process, reference can be made to those descriptions in the foregoing embodiments, and details are not described herein again.

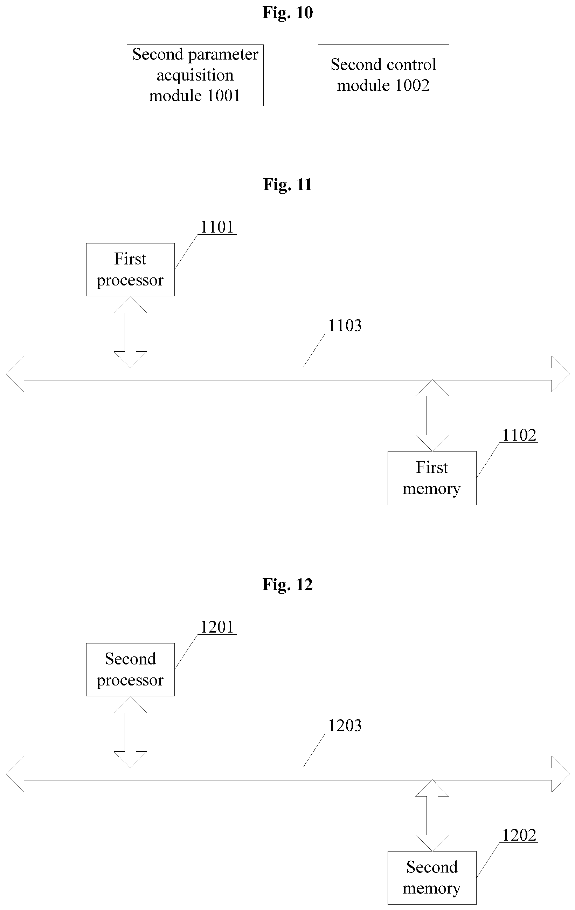

The present embodiment also provides a DRX communication start control apparatus. The DRX communication start control apparatus may be disposed in various communication devices using DRX communications, such as, but not limited to, various forms of terminal devices. As shown in Fig. 10, the DRX communication start control apparatus includes a second parameter acquisition module 1001 and a second control module 1002.

The second parameter acquisition module 1001 is configured to acquire a second DRX parameter including a second start offset duration. The second parameter acquisition module 1001 may acquire the second DRX parameter from the network management device by means of, but not limited to, the foregoing exemplary manner.

The second control module 1002 is configured to start a second timer, and in a case where a timing value of the second timer reaches the second start offset duration, start a DRX communication function. With regard to the specific control process, reference can be made to those descriptions in the foregoing embodiments, and details are not described herein again.

### Embodiment 3

The present embodiment also provides a network management device, as shown in Fig. 11, including a first processor 1101, a first memory 1102 and a first communication bus 1103.

The first communication bus 1103 is configured to implement a communication connection between the first processor 1101 and the first memory 1102.

In one example, the first processor 1101 may be configured to execute a first computer program stored in the first memory 1102, so as to implement the operations of the DRX communication synchronization control method in the above embodiments.

The present embodiment also provides a base station device, as shown in Fig. 12, including a second processor 1201, a second memory 1202 and a second communication bus 1203.

The second communication bus 1203 is configured to implement a communication connection between the second processor 1201 and the second memory 1202.

In one example, the second processor 1201 can be configured to execute a second computer program stored in the second memory 1202, so as to implement the operations of the DRX communication start control method in the above embodiments.

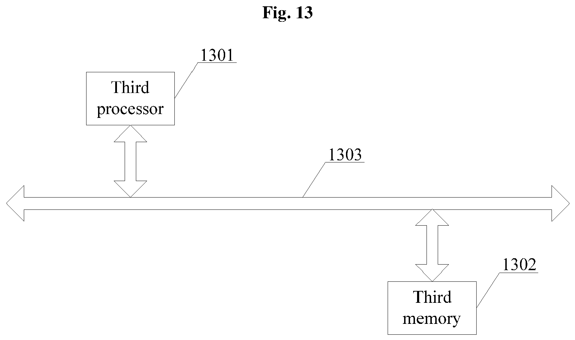

The present embodiment also provides a terminal device, as shown in Fig. 13, including a third processor 1301, a third memory 1302 and a third communication bus 1303.

The third communication bus 1303 is configured to implement a communication connection between the third processor 1301 and the third memory 1302.

In one example, the third processor 1301 can be configured to execute a third computer program stored in the third memory 1302, so as to implement the operations of the DRX communication start control method in the above embodiments.

The present embodiments further provide a computer-readable storage medium. The computer-readable storage medium includes volatile or non-volatile and removable or non-removable media that are implemented in any method or technology for storing information (such as computer-readable instructions, data structures, computer program modules, or other data). The computer-readable storage medium includes, but is not limited to, an RAM (Random Access Memory, random access memory), an ROM (Read-Only Memory, read-only memory), an EEPROM (Electrically Erasable Programmable read only memory, electrically erasable programmable read only memory), a flash memory or other memory technologies, a CD-ROM (Compact Disc Read-Only Memory, compact disc read-only memory), a digital versatile disc (DVD) or other optical disk storage apparatuses, a magnetic cartridge, a magnetic tape, a magnetic disk storage apparatus or other magnetic storage apparatuses, or any other media that can be used for storing desired information and can be accessed by a computer.

In one example, the computer-readable storage medium in the present embodiment can be used for storing a first computer program, and when executed by a first processor, the first computer program implements the operations of the DRX communication synchronization control method in the above embodiments.

In another example, the computer-readable storage medium in the present embodiment can be used for storing a second computer program, and when executed by a second processor, the second computer program implements the operations of the DRX communication start control method in the above embodiments.

In another example, the computer-readable storage medium in the present embodiment can be used for storing a third computer program, and when executed by a third processor, the third computer program implements the operations of the DRX communication start control method in the above embodiments.

The present embodiment also provides a first computer program (or referred to as first computer software), wherein the first computer program can be distributed on a computer-readable medium and executed by a computable apparatus, so as to implement at least one operation of the DRX communication synchronization control method in the above embodiments; and in some cases, at least one operation shown or described can be performed in an order different from that described in the above embodiments.

The present embodiment also provides a second computer program (or referred to as second computer software), wherein the second computer program can be distributed on a computer-readable medium and executed by a computable apparatus, so as to implement at least one operation of the DRX communication start control method in the above embodiments; and in some cases, at least one operation shown or described can be performed in an order different from that described in the above embodiments.

The present embodiment also provides a third computer program (or referred to as third computer software), wherein the third computer program can be distributed on a computer-readable medium and executed by a computable apparatus, so as to implement at least one operation of the DRX communication start control method in the above embodiments; and in some cases, at least one operation shown or described can be performed in an order different from that described in the above embodiments.

The present embodiment also provides a computer program product, including a computer-readable apparatus, wherein any computer program described above is stored on the computer-readable apparatus. In the present embodiment, the computer-readable apparatus can include the computer-readable storage medium as described above.

Therefore, those having ordinary skill in the art should understand that, all or some of operations in the methods disclosed above, and functional modules/units in the system and the apparatus can be implemented as software (which can be implemented by computer program codes executable by a computing apparatus), firmware, hardware and appropriate combinations thereof. In a hardware implementation, the division between the functional modules/units mentioned in the above descriptions does not necessarily correspond to the division of physical components. For example, one physical component can have a plurality of functions, or one function or operation can be cooperatively executed by several physical components. Some or all physical components can be implemented as software executed by a processor, such as a central processing unit, a digital signal processor or a microprocessor, or implemented as hardware, or implemented as an integrated circuit, such as an application specific integrated circuit.

In addition, as is well known to those of ordinary skill in the art that, a communication medium generally includes computer-readable instructions, data structures, computer program modules, or other data in modulated data signals such as carrier waves or other transmission mechanisms, and can include any information transmission medium. Therefore, the present disclosure is not limited to any particular combination of hardware and software.

The above content is a further detailed description of the embodiments of the present disclosure in combination with specific embodiments, and it cannot be considered that the specific implementation of the present disclosure is limited to these descriptions.

## Claims

1. A discontinuous reception, DRX, communication synchronization control method, comprising following operations performed by a network management device:
generating (S301) a first DRX parameter comprising a first start offset duration, and a second DRX parameter comprising a second start offset duration; and
respectively sending (S302) the first DRX parameter and the second DRX parameter to a base station and a terminal, so that the base station and the terminal synchronously start a DRX communication function according to the first start offset duration and the second start offset duration, respectively, wherein the respectively sending (S302) the first DRX parameter and the second DRX parameter to a base station and a terminal comprises: synchronously sending the first DRX parameter and the second DRX parameter to the base station, so that the base station forwards the second DRX parameter to the terminal, wherein the first start offset duration is equal to a sum of the second start offset duration and a forwarding duration, and the forwarding duration is a duration that is required by the base station to forward the second DRX parameter to the terminal.

2. The DRX communication synchronization control method according to claim 1, wherein the forwarding duration is a first duration that is required by the base station to send the second DRX parameter to the terminal by means of an air interface.

3. The DRX communication synchronization control method according to claim 1, wherein the forwarding duration is a sum of a first duration that is required by the base station to send the second DRX parameter to the terminal by means of an air interface, and a second duration that is required by the base station from receiving the second DRX parameter to sending the DRX parameter from the air interface.

4. A discontinuous reception, DRX, communication start control method, comprising:
acquiring (S601), by a base station device, a first DRX parameter comprising a first start offset duration, starting (S602), by the base station device, a first timer, and in a case where a timing value of the first timer reaches the first start offset duration, starting (S602), by the base station device, a DRX communication function; and
acquiring (S701), by a terminal device, a second DRX parameter comprising a second start offset duration, starting (S702), by the terminal device, a second timer, and in a case where a timing value of the second timer reaches the second start offset duration, starting (S702), by the terminal device, a DRX communication function;
wherein the base station device synchronously receives the first DRX parameter and the second DRX parameter from a network management device, and forwards the second DRX parameter to the terminal device, wherein the first start offset duration is equal to a sum of the second start offset duration and a forwarding duration, and the forwarding duration is a duration that is required by the base station device to forward the second DRX parameter to the terminal device.

5. A network management device, comprising a first processor, a first memory and a first communication bus, wherein
the first communication bus is configured to connect the first processor and the first memory; and
the first processor is configured to execute a first computer program stored in the first memory, so as to implement the operations of the DRX communication synchronization control method according to any of claims 1 to 3.

6. A system comprising a base station device and a terminal device, the base station device comprising a second processor, a second memory and a second communication bus, and the terminal device comprising a third processor, a third memory and a third communication bus, wherein
the second communication bus is configured to connect the second processor and the second memory; the third communication bus is configured to connect the third processor and the third memory; the second processor is configured to execute a second computer program stored in the second memory, and the third processor is configured to execute a third computer program stored in the third memory, so as to implement the operations of the DRX communication start control method according to claim 4.

7. A computer-readable storage medium, wherein the computer-readable storage medium stores a first computer program, and when executed by a first processor, the first computer program implements the operations of the DRX communication synchronization control method according to any of claims 1-3.

8. A computer-readable storage medium, wherein the computer-readable storage medium stores a second computer program, and when executed by a second processor, the second computer program implements the operations of the DRX communication start control method according to claim 4.

## Patentansprüche

1. Diskontinuierlicher Empfang, DRX, Kommunikationssynchronisation und Steuerverfahren, umfassend folgende Vorgänge, die von einer Netzverwaltungsvorrichtung durchgeführt werden:
Erzeugen (S301) eines ersten DRX Parameters umfassend eine erste Startversatzdauer umfasst und eines zweiten DRX Parameters umfassend eine zweite Startversatzdauer; und
Senden (S302) des ersten DRX Parameters und des zweiten DRX Parameters jeweils an eine Basisstation und ein Endgerät, so dass die Basisstation und das Endgerät nach der ersten Startversatzdauer bzw. der zweiten Startversatzdauer synchron eine DRX Kommunikationsfunktion starten, wobei das Senden (S302) des ersten DRX-Parameters und des zweiten DRX Parameters jeweils an eine Basisstation und ein Endgerät umfasst: Senden des ersten DRX Parameters und des zweiten DRX Parameters synchron an die Basisstation, so dass die Basisstation den zweiten DRX Parameter an das Endgerät weiterleitet, wobei die erste Startversatzdauer einer Summe der zweiten Startversatzdauer und einer Weiterleitungsdauer gleich ist, und die Weiterleitungsdauer eine Dauer ist, die die Basisstation benötigt, um den zweiten DRX Parameter an das Endgerät weiterzuleiten.

2. DRX Kommunikationssynchronisation und Steuerverfahren nach Anspruch 1, wobei
die Weiterleitungsdauer eine erste Dauer ist, die die Basisstation benötigt, um den zweiten DRX Parameter über eine Funkschnittstelle an das Endgerät zu senden.

3. DRX Kommunikationssynchronisation und Steuerverfahren nach Anspruch 1, wobei
die Weiterleitungsdauer eine Summe einer ersten Dauer, die die Basisstation benötigt, um den zweiten DRX Parameter über eine Funkschnittstelle an das Endgerät zu senden, und einer zweiten Dauer, die die Basisstation von dem Empfangen des zweiten DRX Parameters bis zu dem Senden des DRX Parameters über die Funkschnittstelle benötigt.

4. Discontinuierlicher Empfang, DRX, Kommunikationssynchronisation und Startsteuerverfahren, umfassend:
Erfassen (S601), durch eine Basisstationsvorrichtung, eines ersten DRX Parameters umfassend eine erste Startversatzdauer, Starten (S602), durch die Basisstationsvorrichtung, eines ersten Timers, und in einem Fall, ein Zeitwert des ersten Timers die erste Startversatzdauer erreicht, Starten (S602), durch die Basisstationsvorrichtung, einer DRX-Kommunikationsfunktion; und
Erfassen (S701), durch eine Endgerätvorrichtung, eines zweiten DRX-Parameters umfassend eine zweite Startversatzdauer, Starten (S702), durch das Endgerätvorrichtung, eines zweiten Timers, und in einem Fall, wenn ein Zeitwert des zweiten Timers die zweite Startversatzdauer erreicht, Starten (S702), durch die Endgerätvorrichtung, einer DRX-Kommunikationsfunktion;
wobei die Basisstationsvorrichtung den ersten DRX-Parameter und den zweiten DRX-Parameter synchron von einer Netzverwaltungsvorrichtung empfängt und den zweiten DRX-Parameter an die Endgerätevorrichtung weiterleitet,
wobei die erste Startversatzdauer gleich einer Summe der zweiten Startversatzdauer und einer Weiterleitungsdauer ist, und die Weiterleitungsdauer eine Dauer ist, die die Basisstationsvorrichtung benötigt, um den zweiten DRX-Parameter an die Endgerätevorrichtung weiterzuleiten.

5. Netzverwaltungsvorrichtung, umfassend einen ersten Prozessor, einen ersten Speicher und einen ersten Kommunikationsbus, wobei
der erste Kommunikationsbus dazu konfiguriert ist, den ersten Prozessor und den ersten Speicher zu verbinden; und
wobei der erste Prozessor dazu konfiguriert ist, ein erstes Computerprogramm auszuführen, das in dem ersten Speicher gespeichert ist, um die Vorgänge des DRX Kommunikationssynchronisation und Steuerverfahrens nach einem der Ansprüche 1 bis 3 zu implementieren.

6. System umfassend eine Basisstationsvorrichtung und eine Endgerätevorrichtung, wobei die Basisstationsvorrichtung einen zweiten Prozessor, einen zweiten Speicher und einen zweiten Kommunikationsbus umfasst, und die Endgerätevorrichtung einen dritten Prozessor, einen dritten Speicher und einen dritten Kommunikationsbus umfasst, wobei der zweite Kommunikationsbus dazu konfiguriert ist, den zweiten Prozessor und den zweiten Speicher zu verbinden; der dritte Kommunikationsbus dazu konfiguriert ist, den dritten Prozessor und den dritten Speicher zu verbinden; der zweite Prozessor dazu konfiguriert ist, ein zweites Computerprogramm auszuführen, das in dem zweiten Speicher gespeichert ist, und der dritte Prozessor dazu konfiguriert ist, ein drittes Computerprogramm auszuführen, das in dem dritten Speicher gespeichert ist, um die Vorgänge des DRX Kommunikation und Startsteuerverfahrens nach Anspruch 4 zu implementieren.

7. Computerlesbares Speichermedium, wobei das computerlesbare Speichermedium ein erstes Computerprogramm speichert, und wenn es von einem ersten Prozessor ausgeführt wird, das erste Computerprogramm die Vorgänge des DRX Kommunikationssynchronisation und Steuerverfahrens nach einem der Ansprüche 1 bis 3 implementiert.

8. Computerlesbares Speichermedium, wobei das computerlesbare Speichermedium ein zweites Computerprogramm speichert, und wenn es von einem zweiten Prozessor ausgeführt wird, das zweite Computerprogramm die Vorgänge des DRX Kommunikation und Startsteuerverfahrens nach Anspruch 4 implementiert.

## Revendications

1. Procédé de commande de synchronisation de communication en réception discontinue, DRX, comprenant les opérations suivantes exécutées par un dispositif de gestion de réseau :
générer (S301) un premier paramètre DRX comprenant une première durée de décalage de démarrage, et un second paramètre DRX comprenant une seconde durée de décalage de démarrage ; et
envoyer respectivement (S302) le premier paramètre DRX et le second paramètre DRX à une station de base et à un terminal, de manière que la station de base et le terminal démarrent respectivement de manière synchrone une fonction de communication DRX selon la première durée de décalage de démarrage et la seconde durée de décalage de démarrage, le fait d'envoyer respectivement (S302) le premier paramètre DRX et le second paramètre DRX à une station de base et à un terminal comprenant : envoyer de manière synchrone le premier paramètre DRX et le second paramètre DRX à la station de base, de sorte que la station de base transfère le second paramètre DRX au terminal, la première durée de décalage de démarrage étant égale à une somme de la seconde durée de décalage de démarrage et d'une durée de transfert,
et la durée de transfert étant une durée requise par la station de base pour transférer le second paramètre DRX au terminal.

2. Procédé de commande de synchronisation de communication DRX selon la revendication 1, dans lequel
la durée de transfert est une première durée requise par la station de base pour envoyer le second paramètre DRX au terminal par une interface radio.

3. Procédé de commande de synchronisation de communication DRX selon la revendication 1, dans lequel
la durée de transfert est une somme d'une première durée requise par la station de base pour envoyer le second paramètre DRX au terminal par une interface radio, et d'une seconde durée qui est requise par la station de base entre la réception du second paramètre DRX et l'envoi du paramètre DRX par l'interface radio.

4. Procédé de commande de démarrage de communication en réception discontinue, DRX, comprenant :
acquérir (S601), par un dispositif de station de base, un premier paramètre DRX comprenant une première durée de décalage de démarrage, démarrer (S602), par le dispositif de station de base, un premier minuteur, et dans un cas où une valeur temporelle du premier minuteur atteint la première durée de décalage de démarrage, démarrer (S602), par le dispositif de station de base, une fonction de communication DRX ; et
acquérir (S701), par un dispositif terminal, un second paramètre DRX comprenant une seconde durée de décalage de démarrage, démarrer (S702), par le dispositif terminal, un second minuteur, et dans un cas où une valeur temporelle du second minuteur atteint la seconde durée de décalage de démarrage, démarrer (S702), par le dispositif terminal, une fonction de communication DRX ;
le dispositif de station de base recevant de manière synchrone le premier paramètre DRX et le second paramètre DRX depuis un dispositif de gestion de réseau, et transférant le second paramètre DRX au dispositif terminal,
la première durée de décalage de démarrage étant égale à une somme de la seconde durée de décalage de démarrage et d'une durée de transfert, et la durée de transfert étant une durée requise par le dispositif de station de base pour transférer le second paramètre DRX au dispositif terminal.

5. Dispositif de gestion de réseau, comprenant un premier processeur, une première mémoire et un premier bus de communication,
le premier bus de communication étant configuré pour connecter le premier processeur et la première mémoire ; et
le premier processeur étant configuré pour exécuter un premier programme informatique stocké dans la première mémoire, de manière à mettre en œuvre les opérations du procédé de commande de synchronisation de communication DRX selon l'une quelconque des revendications 1 à 3.

6. Système comprenant un dispositif de station de base et un dispositif terminal, le dispositif de station de base comprenant un second processeur, une seconde mémoire et un second bus de communication, et le dispositif terminal comprenant un troisième processeur, une troisième mémoire et un troisième bus de communication, le second bus de communication étant configuré pour connecter le second processeur et la seconde mémoire ; le troisième bus de communication étant configuré pour connecter le troisième processeur et la troisième mémoire ;
le second processeur étant configuré pour exécuter un second programme informatique stocké dans la seconde mémoire, et le troisième processeur étant configuré pour exécuter un troisième programme informatique stocké dans la troisième mémoire, de manière à mettre en œuvre les opérations du procédé de commande de démarrage de communication DRX selon la revendication 4.

7. Support de stockage lisible par ordinateur, ledit support de stockage lisible par ordinateur stockant un premier programme informatique, et lorsque exécuté par un premier processeur, ledit premier programme informatique met en œuvre les opérations du procédé de commande de synchronisation de communication DRX selon l'une quelconque des revendications 1 à 3.

8. Support de stockage lisible par ordinateur, ledit support de stockage lisible par ordinateur stockant un second programme informatique, et lorsque exécuté par un second processeur, ledit second programme informatique met en œuvre les opérations du procédé de commande de démarrage de communication DRX selon la revendication 4.
